(19) Europäisches Patentamt
European Patent Office
Office européen des brevets

(11) **EP 1 927 001 B1**

(12) **FASCICULE DE BREVET EUROPEEN**

(45) Date de publication et mention
de la délivrance du brevet:
**10.11.2010 Bulletin 2010/45**

(21) Numéro de dépôt: **06793739.1**

(22) Date de dépôt: **22.09.2006**

(51) Int Cl.:
**G01P 5/26** (2006.01)    **G01P 13/02** (2006.01)
**G01S 17/58** (2006.01)

(86) Numéro de dépôt international:
**PCT/EP2006/066619**

(87) Numéro de publication internationale:
**WO 2007/033987 (29.03.2007 Gazette 2007/13)**

(54) **DISPOSITIF D'ANEMOMETRIE LASER A SECURITE OCULAIRE AMELIOREE**

LASERVORRICHTUNG ZUM MESSEN DER LUFTGESCHWINDIGKEIT MIT VERBESSERTER AUGENSICHERHEIT

LASER AIRSPEED-MEASURING DEVICE WITH IMPROVED OCULAR SAFETY

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **23.09.2005 FR 0509781**

(43) Date de publication de la demande:
**04.06.2008 Bulletin 2008/23**

(73) Titulaire: **THALES**
**92200 Neuilly sur Seine (FR)**

(72) Inventeurs:
• **LACONDEMINE, Xavier**
**F-26000 Valence (FR)**
• **SCHLOTTERBECK, Jean-Pierre**
**F-26300 Rochefort-Samson (FR)**

(74) Mandataire: **Esselin, Sophie et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**US-A- 3 984 685     US-A- 5 313 263**

Remarques:
Le dossier contient des informations techniques présentées postérieurement au dépôt de la demande et ne figurant pas dans le présent fascicule.

**Description**

L'invention est relative à un dispositif de mesure optique destiné notamment à évaluer la vitesse d'un porteur, tel qu'un aéronef, par rapport à une masse d'air. Ce type de dispositif s'appuie sur une technique consistant à mesurer le décalage de fréquence, représentatif de la vitesse relative à l'air, entre un faisceau laser émis dans l'atmosphère et le faisceau rétro-diffusé par les aérosols naturels de l'air, utilisés comme des traceurs de champ de vent. On parle d'anémométrie laser Doppler longitudinale car le décalage de fréquence qui résulte de l'effet Doppler est directement proportionnel à la projection du vecteur vitesse sur l'axe de visée.

L'information utile, portée par le décalage de fréquence Doppler, est obtenue en effectuant une détection de type cohérent ; un faisceau issu d'une source de lumière cohérente, par exemple un laser, est séparé en deux faisceaux. Un premier faisceau appelé faisceau signal est envoyé dans la zone de mesure et un second faisceau appelé faisceau de référence ou oscillateur local constitue une référence pour la détection du décalage de fréquence Doppler.

Les aérosols présents naturellement dans l'atmosphère rétro-diffusent la lumière du faisceau signal, produisant un signal rétro-diffusé par le milieu dont la fréquence subit un décalage de fréquence Doppler $\Delta f_{Doppler}$ par rapport à celle de la lumière incidente. Le signal rétro-diffusé par le milieu interfère avec le faisceau de référence sur la surface photosensible d'un détecteur. La fréquence du signal électrique délivré par le détecteur correspond à l'écart $\Delta f_{Doppler}$ entre la fréquence du signal rétro-diffusé et la fréquence du faisceau de référence, on en déduit une mesure de la vitesse relative l'aéronef par rapport au milieu, sachant que l'expression qui lie ces deux grandeurs est la suivante :

$$\Delta f_{Doppler} = 2v / \lambda \qquad (A)$$

v étant la projection sur la ligne de visée du laser, du vecteur vitesse de l'aéronef par rapport au milieu ambiant (atmosphère) ;

λ étant la longueur d'onde du faisceau émis dans le milieu.

L'évaluation des composantes du vecteur vitesse de l'aéronef par rapport au milieu ambiant $\vec{V}$, est réalisée par la mesure, pouvant être séquentielle, de projections du vecteur vitesse de l'aéronef par rapport au milieu ambiant, suivant au moins trois directions non coplanaires.

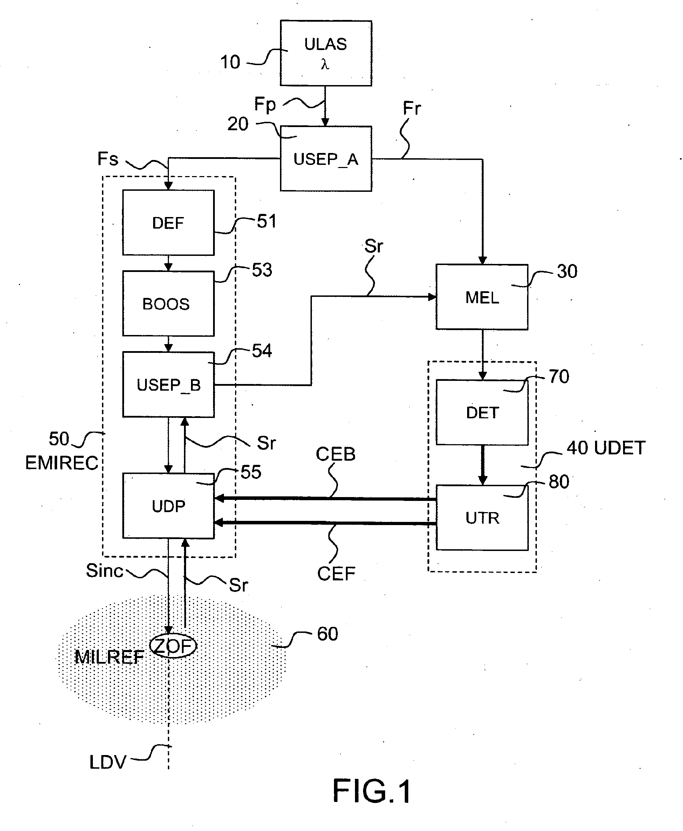

La figure 1 montre un synoptique d'un dispositif de mesure optique de décalage de fréquence Doppler $\Delta f_{Doppler}$, constituant l'état de l'art d'un anémomètre laser hétérodyne. De tels dispositifs sont décrits dans les brevets US 5313263 et US 3984685.

Le dispositif de la figure 1 comporte une unité laser ULAS_A 10 fournissant un faisceau lumineux pour attaquer une unité de séparation USEP_A 20 délivrant un faisceau lumineux de signal Fs pour attaquer une voie de signal optique d'émission/réception EMIREC 50 et un faisceau lumineux de référence Fr pour attaquer un coupleur optique MEL 30.

L'unité laser ULAS_A comporte une source de rayonnement et un dispositif optique mettant spatialement en forme le rayonnement issu de la source. L'unité laser ULAS_A produit un faisceau lumineux dont la longueur d'onde λ est par exemple 1,55μm qui est une longueur d'onde communément employée dans le domaine des Télécommunications optiques et pour laquelle l'atmosphère est relativement transparente.

Les différents constituants de l'unité laser ULAS_A ne sont pas représentés sur la figure 1.

La voie de signal optique d'émission/réception EMIREC comporte en série un amplificateur de signal optique BOOS 53, une unité de séparation USEP_B 54 et une unité de déplacement UDP 55 fournissant un signal optique de puissance Sinc focalisé dans une zone de focalisation ZOF à l'intérieur du milieu de référence MILREF 60. La voie de signal optique d'émission/réception EMIREC peut également comporter un dispositif de décalage de fréquence de signal optique DEF 51, par exemple un modulateur acousto-optique décalant la fréquence du faisceau qui lui est appliqué de l'ordre d'une centaine de Méga-Hertz.

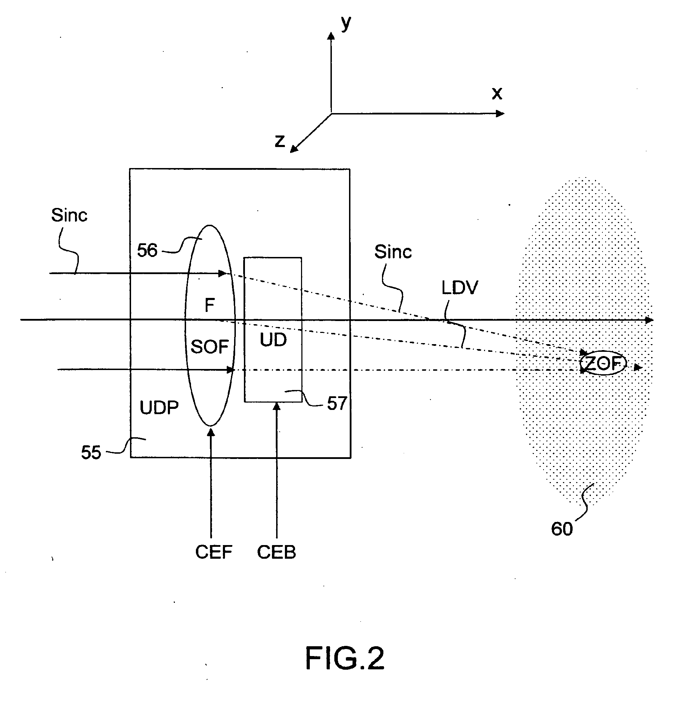

L'unité de déplacement UDP se caractérise par un foyer optique $F_{opt}$ et un axe optique noté X, qui sont représentés plus explicitement sur la figure 2. On appelle « ligne de visée » LDV, l'axe reliant le foyer optique $F_{opt}$ au centre de la zone de focalisation ZOF où se concentre le signal optique de puissance Sinc. Le plan YZ est normal à l'axe X.

L'orientation de la ligne de visée LDV qui est aussi l'orientation privilégiée du signal optique de puissance Sinc émergeant de l'unité de déplacement UDP, peut être commandée. C'est également le cas de la distance séparant le foyer $F_{opt}$ du centre de la zone de focalisation ZOF, comme cela est présenté sur la figure 2.

L'unité de séparation USEP_B comporte, par exemple, en série, un coupleur de séparation de polarisation suivi d'une liaison optique bidirectionnelle. Les différents constituants de l'unité de séparation USEP_B ne sont pas représentés sur la figure 1.

L'unité de déplacement UDP capte des rayons lumineux Sr rétro-diffusés par le milieu de référence MILREF dans une direction déterminée.

Les rayons lumineux rétro-diffusés Sr peuvent éventuellement comporter un décalage de fréquence Doppler $\Delta f_{Doppler}$ généré par le milieu MILREF, par rapport au faisceau incident Sinc. Les rayons lumineux rétro-diffusés Sr, sont captés par l'unité de déplacement UDP, ils prennent la forme d'un faisceau signal rétro-diffusé, ou encore «écho lumineux » Sr qui est transporté à travers l'unité de séparation USEP_B pour attaquer le coupleur de mélange optique MEL.

Le coupleur de mélange optique MEL reçoit, sur une première entrée le faisceau lumineux de référence Fr provenant du coupleur USEP_A et sur une deuxième entrée le faisceau signal rétro-diffusé Sr, provenant de l'unité de séparation USEP_B. Le coupleur de mélange optique MEL effectue le mélange des deux signaux optiques appliqués à ses deux entrées, produisant un battement périodique sur la surface photosensible d'un détecteur DET 40.

Le détecteur DET délivre un signal électrique lorsqu'un faisceau lumineux de longueur d'onde λ est appliqué sur sa surface sensible. Le signal électrique de battement produit par le détecteur DET, lorsque sa surface sensible est illuminé par le battement périodique varie à la même fréquence que le battement périodique.

Une unité de traitement de signal UTR 70 reçoit le signal électrique de battement résultant du battement entre le faisceau de référence Fr et le faisceau rétro-diffusé Sr et assure l'estimation de sa fréquence Doppler $\Delta f_{Doppler}$.

La mesure de la projection sur la ligne de visée LDV du vecteur de vitesse relative de l'aéronef par rapport au milieu $\overline{V}$, se déduit de la mesure du décalage de fréquence Doppler $\Delta f_{Doppler}$.

La figure 2 détaille le fonctionnement d'une unité de déplacement UDP 57 comportant un système optique de focalisation SOF 56 et une unité de déflexion UD.

Le système optique de focalisation SOF 56 commande la valeur de la distance entre la zone de focalisation ZOF du signal optique de puissance Sinc et le foyer $F_{opt}$ l'unité de déplacement UDP selon direction de la ligne de visée LDV. Le système optique de focalisation SOF peut être, par exemple, une optique à distance focale variable, la valeur de la distance focale étant, dans ce cas, déterminée par l'intermédiaire d'une commande électrique de focalisation CEF.

L'unité de déflexion UD commande l'orientation de la ligne de visée LDV du signal optique de puissance Sinc. L'unité de déflexion UD peut être, par exemple, un prisme tournant autour de l'axe optique du système optique de focalisation SOF. Le mouvement du prisme est commandé par exemple, par l'intermédiaire d'une commande électrique de balayage CEB. La commande CEB arrivant sur l'unité de déflexion UD agit sur l'orientation de la ligne de visée LDV et par conséquent sur la position de la zone de focalisation ZOF dans le milieu de référence MILREF.

Dans l'état antérieur de la technique, un dispositif de mesure du vecteur vitesse $\overline{V}$, similaire à celui présenté sur la figure 1, réalise une mesure élémentaire d'une projection de $\overline{V}$ selon au moins trois orientations élémentaires de ligne de visée, LDV choisies, non coplanaires. Dans ce cas, les mesures élémentaires ont lieu séquentiellement, et la ligne de visée LDV est maintenue immobile, dans chacune des trois orientations élémentaires de la ligne de visée LDV choisies, pendant la durée de la mesure élémentaire. L'évaluation du vecteur vitesse $\overline{V}$ se déduit directement des mesures élémentaires par un calcul géométrique qui dépend uniquement des orientations élémentaires de la ligne de visée LDV. Le mouvement de la ligne de visée LDV entre les mesures sert à rallier rapidement et successivement les orientations élémentaires de la ligne de visée LDV.

L'un des principaux critères de mérite de l'anémomètre représenté sur la figure 1 est le rapport signal sur bruit, RSB mesuré en sortie du détecteur DET. Plus la valeur du RSB est élevée et plus la mesure anémométrique est aisée à réaliser. Le RSB est d'autant plus élevé que l'énergie de l'écho lumineux Sr arrivant sur le détecteur de l'unité de détection UDET est importante.

Pour un signal optique de puissance Sinc, incident dans le milieu MILREF d'énergie donnée, l'écho lumineux Sr est d'autant plus puissant que la concentration en aérosols efficacement rétro-diffusants du milieu MILREF dans la zone de focalisation ZOF est élevée. Or la concentration en aérosols, décroît fortement avec l'altitude. En conséquence, pour être en mesure de fonctionner aussi bien à haute altitude, c'est-à-dire au delà de quatre kilomètres, qu'à basse altitude, un anémomètre laser doit classiquement émettre, dans le milieu MILREF, une forte intensité optique Sinc suivant une direction fixe, ce qui pose des problèmes de sécurité, notamment de sécurité oculaire, en particulier dans des conditions de vol à basse altitude.

Un but important de l'invention est donc de pallier ce problème de sécurité oculaire.

Pour atteindre ce but, l'invention propose un dispositif de mesure à sonde optique pour évaluer un vecteur de vitesse relative $\overleftarrow{V}$ d'un porteur par rapport à un milieu de référence MILREF, le dispositif équipant le porteur, le dispositif comportant :

- une unité laser ULAS_A (10) fournissant un faisceau primaire Fp, de longueur d'onde λ, pour attaquer une unité de séparation USEP_A (20) délivrant un faisceau lumineux de signal Fs pour attaquer une voie de signal optique EMIREC (50), et un faisceau lumineux de référence Fr pour attaquer une première entrée d'un coupleur de mélange optique MEL (30) ;

- la voie de signal optique EMIREC, fournissant à l'émission un signal optique de puissance Sinc qui suit une direction appelée ligne de visée LDV et qui est concentré en une zone de focalisation ZOF, et d'autre part recueillant un écho lumineux Sr renvoyé par la zone de focalisation ZOF, le transportant jusqu'à une deuxième entrée du coupleur de mélange optique MEL ;

- des moyens de déplacement de la zone de focalisation ZOF du signal optique de puissance Sinc dans le milieu de référence MILREF ;

- le coupleur de mélange optique MEL délivrant un signal optique de battement comportant la somme du faisceau lumineux de référence Fr et de l'écho lumineux Sr ;

- un détecteur photo-sensible DET (70), recevant sur sa surface sensible, le signal optique de battement issu du coupleur de mélange optique MEL et fournissant un signal électrique de battement,
- une unité de traitement UTR (80), recevant le signal électrique de battement et délivrant une mesure de $\overleftarrow{V}$.

caractérisé en ce que les moyens de déplacement de la zone de focalisation ZOF agissent sur l'orientation de la ligne de visée LDV, l'animant d'un mouvement connu, de vitesse non nulle et en ce que l'unité de traitement UTR évalue le vecteur $\overleftarrow{V}$ en au moins une phase de « recherche » basée sur une identification avec une forme attendue de l'évolution de la fréquence du signal électrique de battement en fonction de l'orientation de la ligne de visée LDV pour déterminer une valeur approchée de $\overleftarrow{V}$, suivie d'une phase de « poursuite » basée sur une validation itérative de valeurs de $\overleftarrow{V}$ voisines de la valeur approchée de $\overleftarrow{V}$.

Par rapport à l'état antérieur de la technique présenté plus haut, l'invention présente un certain nombre d'avantages :

- une meilleure sensibilité permettant un fonctionnement à haute altitude avec un signal optique Sinc incident d'énergie réduite ;
- une sécurité oculaire renforcée ;
- une sûreté de fonctionnement améliorée.

Le dispositif selon l'invention permet de détecter et de mesurer un décalage de fréquence Doppler $\Delta f_{Doppler}$ malgré un faible RSB en particulier lorsque la concentration en aérosols du milieu de référence MILREF est faible. Cet avantage découle de l'amélioration de la sensibilité et la précision de la mesure que la phase de « poursuite » apporte par rapport à un dispositif de l'état antérieur de la technique. Le mouvement incessant de la zone de focalisation ZOF du signal optique de puissance Sinc, produit par le mouvement de la ligne de visée LDV, diminue le risque lié à l'emploi d'une unité laser car il réduit la durée d'illumination éventuelle d'un oeil humain. Enfin, le mouvement de la ligne de visée LDV sans à-coup améliore la fiabilité du dispositif notamment la fiabilité de l'unité de déplacement UDP.

D'autres caractéristiques et avantages de l'invention apparaîtront à la lecture de la description détaillée qui suit, faite à titre d'exemple et en référence aux dessins annexés dans lesquels :

- la figure 1, déjà décrite, montre une architecture schématique d'un anémomètre laser selon l'art antérieur ;
- la figure 2, déjà décrite, présente un exemple d'architecture d'une unité de déplacement UDP permettant de déplacer la zone de focalisation ZOF du signal optique de puissance Sinc dans le milieu de référence MILREF;

- la figure 3a représente un mouvement circulaire uniforme de la zone de focalisation ZOF du signal optique de puissance Sinc produit par une unité de déplacement UDP;
- la figure 3b représente l'évolution temporelle d'un décalage de fréquence Doppler $\Delta f_{Doppler}$ lorsque la zone de focalisation ZOF du signal optique de puissance Sinc est animée d'un mouvement circulaire uniforme ;

Pour faciliter la lecture de la description, les mêmes repères désigneront les mêmes éléments dans les différentes figures.

Avantageusement, les moyens de déplacement de la zone de focalisation ZOF du signal optique de puissance Sinc comportent une unité de déplacement UDP imprimant une orientation à la ligne de visée LDV du signal optique de puissance Sinc.

Avantageusement, l'unité laser ULAS comporte une source laser impulsionnelle. Dans ce cas de figure, la puissance crête de l'impulsion émise est généralement telle qu'à basse altitude, chaque impulsion permet d'extraire l'information de vitesse.

Avantageusement, l'unité laser ULAS comporte une source laser continue.

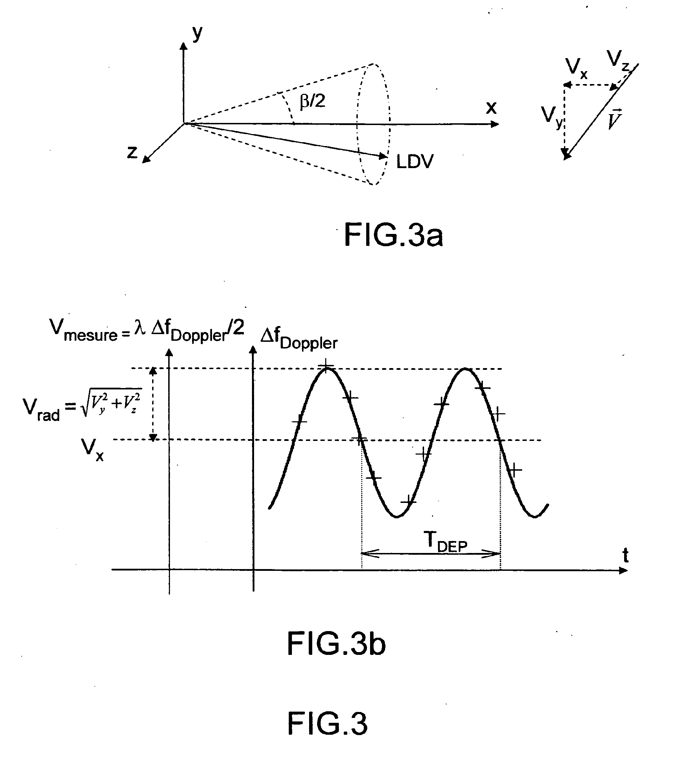

La figure 3a représente un mouvement imprimé par l'unité de déplacement UDP à la zone de focalisation ZOF du signal optique de puissance Sinc. Par exemple le mouvement est circulaire autour de l'axe optique X du système optique SOP, de vitesse uniforme et de période $T_{DEP}$. La ligne de visée LDV se déplace , dans ce cas périodiquement selon un cône d'angle au sommet $\beta$ valant, par exemple, 60 degrés. Lorsque l'anémomètre est embarqué sur un porteur de type avion, la zone de focalisation ZOF du signal optique de puissance Sinc, représente par exemple un volume d'un millimètre cube et est, par exemple, distante du foyer $F_{opt}$ de l'unité de déplacement UDP de cinquante centimètres.

L'unité de déplacement UDP est par exemple un prisme mobile, ou bien un ensemble de miroirs oscillants. Dans le premier cas, l'unité de déplacement UDP comporte au moins un prisme mobile, tournant suivant un axe de référence fixe et en ce que l'orientation de la ligne de visée LDV est déterminée par passage du signal optique de puissance Sinc au travers du prisme mobile. Avantageusement, l'axe de référence fixe est parallèle à la direction du mouvement du porteur.

Dans le deuxième cas, l'unité de déplacement UDP comporte au moins deux miroirs oscillants et en ce que l'orientation de la ligne de visée LDV est déterminée par des réflexions du signal optique de puissance Sinc sur les miroirs oscillants.

L'unité de déplacement UDP agit, en outre, sur la distance séparant la zone de focalisation ZOF de l'unité de déplacement UDP.

Pour chaque orientation de la ligne de visée LDV, la mesure anémométrique correspond à une projection de $\overleftarrow{V}$ selon la direction de la ligne de visée LDV.

Autrement dit, pour un vecteur $\vec{V}$ constant, le mouvement imprimé à la ligne de visée LDV produit une variation temporelle du décalage de fréquence Doppler détecté $\Delta f_{Doppler}$.

La figure 3b illustre, pour un vecteur vitesse $\vec{V}$ constant, l'allure de la variation temporelle de la mesure du décalage de fréquence Doppler détecté $\Delta f_{Doppler}$, lorsque la zone de focalisation ZOF du signal optique de puissance Sinc est animée d'un mouvement périodique, ici d'un mouvement circulaire à vitesse constante comme décrit sur la figure 3a. L'évolution temporelle du décalage de fréquence Doppler détecté $\Delta f_{Doppler}$ correspondant est également périodique de même période.

Avantageusement, l'unité de déplacement UDP imprime un déplacement de la zone de focalisation ZOF circulaire et de vitesse constante.

Le décalage de fréquence Doppler détecté $\Delta f_{Doppler}$ peut s'exprimer comme une mesure de vitesse grâce à l'expression (A). Ainsi, l'évolution temporelle de $V_{mesure} = \lambda\, \Delta f_{Doppler}/2$ décrit la variation temporelle de la projection du vecteur $\vec{V}$ sur la ligne de visée LDV.

On peut montrer que l'évolution temporelle de $V_{mesure}$ est reliée aux composantes du vecteur $\vec{V}$. Par exemple, dans le cas du mouvement circulaire uniforme de la zone de focalisation ZOF, de période $T_{DEP}$ identique à celui présenté sur la figure 3a, l'évolution temporelle de $V_{mesure}$ s'exprime sous la forme d'une somme d'une composante continue et d'une composante sinusoïdale, de période $T_{DEP}$. La composante continue est reliée à la composante de $\vec{V}$ suivant l'axe longitudinal et l'amplitude de la fonction sinusoïdale est reliée à la composante radiale de $\vec{V}$. Par « axe longitudinal », on entend la direction moyenne prises par la ligne de visée LDV pendant la durée $T_{DEP}$ et par « composante radiale » on entend la projection sur un plan normal à l'axe longitudinal précédemment défini.

A basse altitude, l'écho lumineux Sr a généralement un niveau suffisant pour que la mesure du décalage de fréquence Doppler $\Delta f_{Doppler}$ s'opère avec un RSB suffisamment élevé. Au cours du temps, on peut donc acquérir une évolution temporelle du décalage de fréquence Doppler $\Delta f_{Doppler}$ qui n'est pas trop bruitée.

Par ailleurs, connaissant $\vec{V}$ et le mouvement de la ligne de visée LDV, il est possible de déterminer une fonction théorique F(t) fournissant la valeur du décalage de fréquence Doppler $\Delta f_{Doppler}$, en fonction du temps. De sorte que, $V_{mesure}$ est égale à $\lambda F(t)/2$ à tout instant. Ainsi à l'inverse, en s'appuyant sur une identification de l'évolution temporelle des mesures $V_{mesure}$ avec la fonction F(t) on accède indirectement aux trois composantes de $\vec{V}$.

Cette méthode appelée également « phase de recherche » comporte au moins les quatre étapes suivantes

- une première étape d'acquisition numérique d'au moins trois séquences temporelles de signal électrique de battement correspondant à des orientations différentes de la ligne de visée LDV, les séquences temporelles ayant une durée telle que l'orientation de la ligne de visée LDV peut être considérée comme immobile sur la durée de l'acquisition ;

- une deuxième étape d'extraction du décalage de fréquence Doppler à partir de la mesure de la fréquence sur chacune des séquences temporelles ;
- une troisième étape de détermination de la fonction théorique de modulation du décalage de fréquence Doppler en fonction du mouvement de la ligne de visé LDV ;
- une quatrième étape d'identification de l'évolution temporelle des décalage de fréquence Doppler avec la fonction théorique de modulation.

Par exemple, dans le cas d'un mouvement circulaire uniforme de la zone de focalisation ZOF du signal optique de puissance Sinc autour d'un axe X on a déjà vu que la fonction théorique F(t) s'exprime comme une somme d'une composante continue et d'une composante sinusoïdale, de période $T_{DEP}$ connue. A partir des mesures du décalage de fréquence Doppler, on détermine la fonction F(t) la plus vraisemblable, et on cherche ensuite à obtenir, d'une part, la valeur de la composante continue de la fonction F(t), d'autre part, la valeur de l'amplitude et de la phase de la composante sinusoïdale de la fonction F(t).

Le dispositif selon l'invention réalise des acquisitions numériques de mesures $V_{mesure}$ au cours du temps sur des durées suffisamment brèves pour que le mouvement de la ligne de visée LDV n'engendre pas un déplacement de la zone de focalisation ZOF qui perturbe la mesure. En effet si le mouvement de la ligne de visée est perceptible pendant l'acquisition, ce mouvement agit directement sur la valeur du décalage Doppler et donc sur la finesse et le niveau d'une raie fréquentielle (ou pic) Doppler apparaissant sur une représentation fréquentielle de la séquence temporelle.

Sur la figure 3b, on représente des valeurs de mesures $V_{mesure}$ en fonction de la date de début d'acquisition des séquences. Les valeurs de mesures $V_{mesure}$ sont représentées par des croix. Sur la même figure, on trace l'allure de la fonction F(t) en traits pleins. Cette courbe se déduit des valeurs de mesures $V_{mesure}$ par le calcul, au moyen, par exemple, d'algorithmes de régression.

Les caractéristiques de la fonction F(t) permettent d'accéder indirectement aux composantes du vecteur $\vec{V}$. Toutefois, cette méthode ne produit habituellement qu'une valeur approchée de $\vec{V}$.

A haute altitude, l'écho lumineux Sr est faible, par conséquent le niveau de la raie fréquentielle Doppler apparaissant sur une représentation fréquentielle d'une séquence temporelle brève n'est pas suffisant pour effectuer une mesure directe du décalage de fréquence Doppler $\Delta f_{Doppler}$ de la même manière qu'à basse altitude : la durée d'intégration étant alors insuffisante.

Dans ce cas, il parait intéressant d'accumuler plusieurs spectres obtenus à partir d'acquisitions de signal réalisées au cours du mouvement de la ligne de visée LDV. Pour que l'accumulation de mesures $V_{mesure}$ contribue à améliorer le niveau de la raie Doppler, il faut au préalable; mettre en cohérence les mesures successives de $V_{mesure}$, afin de s'affranchir des effets provoqués par le mouvement de la ligne de visée LDV.

La mesure de $\overleftarrow{V}$ suivant cette méthode est aussi appelée « phase de poursuite », car elle s'apparente à une poursuite en entretenant, dans des conditions où la mesure directe est difficile, une connaissance des caractéristiques d'un vecteur vitesse $\overleftarrow{V}$, à partir d'une valeur prise par $\overleftarrow{V}$ antérieurement Ceci permet notamment de réaliser une mesure du vecteur $\overline{V}$ à haute altitude sans que l'on augmente l'énergie du signal optique de puissance Sinc, ou encore, à basse altitude d'améliorer la qualité de la précision de la mesure.

La phase de « poursuite » comporte au moins les cinq étapes suivantes :

- une première étape consistant à réaliser une acquisition numérique du signal électrique de battement, l'acquisition débutant à une date connue et ayant une durée telle que l'orientation de la ligne de visée LDV ne peut pas être considérée comme immobile sur la durée de l'acquisition ;
- une deuxième étape pour élaborer des hypothèses sur la valeur probable du vecteur $\overleftarrow{V}$ à la date de début de l'acquisition ;
- une troisième étape pour scinder l'acquisition numérique du signal électrique de battement en séquences élémentaires, les séquences élémentaires ayant une durée telle que l'orientation de la ligne de visée LDV peut être considéré comme immobile pendant la durée des séquence.
- une quatrième étape de mise en cohérence des séquences élémentaires pour établir des séquences élémentaires recalées. Cette mise en cohérence permet de compenser les effets du mouvement de la ligne de visée LDV entre les dates de début des séquences, la mise en cohérence s'appuyant sur la valeur du vecteur $\overleftarrow{V}$ dans une des hypothèses considérées à la deuxième étape, la connaissance de la date de début de chaque séquence d'acquisition et la connaissance du mouvement de la ligne de visée LDV à tout instant;
- une cinquième étape de validation/infirmation des hypothèses basée sur une évaluation des caractéristiques spectrales des séquences élémentaires recalées.

Avantageusement, les hypothèses sur la valeur du vecteur $\overleftarrow{V}$ considérées à la deuxième étape de la phase de « poursuite » sont bâties à partir de la valeur approchée de $\overleftarrow{V}$ obtenue à l'issue de l'étape de recherche.
La mise en cohérence est réalisée par un recalage numérique des spectres fréquentiels des séquences en fonction de la date de début des séquences élémentaires. Cette mise en cohérence est opérée, par l'unité de traitement UTR, elle revient à intégrer le signal électrique de battement sur une durée beaucoup plus longue que celle employée à basse altitude, tout en conservant une mobilité de la ligne de visée LDV.
La nature de la commande de balayage CEB alimentant l'unité de déplacement UDP du dispositif selon l'invention diffère de celle de l'art antérieur de la technique. Dans le dispositif selon l'invention, l'unité de déplacement UDP anime l'orientation de la ligne de visée LDV d'un mouvement connu, de vitesse non nulle de sorte que le décalage de fréquence Doppler détecté $\Delta f_{Doppler}$, suit de la fonction temporelle notée F(t) et qui est une modulation autour d'une fréquence fixe $Freq_{fixe}$.
Dans le cas du mouvement circulaire et uniforme, de période $T_{DEP}$, de la zone de focalisation ZOF décrit sur la figure 3a, $Freq_{fixe}$ correspond par exemple, à la valeur de la projection du vecteur vitesse sur la moyenne de la ligne de visée LDV, soit ici sur la direction X, et F(t) est une fonction périodique du temps donnant la valeur du décalage de fréquence Doppler détecté $\Delta f_{Doppler}$, qui dépend exclusivement de $\overleftarrow{V}$ et de la direction de la ligne de visée LDV prise à l'instant t. Connaissant à tout instant t la direction de la ligne de visée LDV, on peut évaluer la valeur de la fonction F(t) à partir de l'élaboration d'une hypothèse sur la valeur du vecteur vitesse $\overleftarrow{V}$.

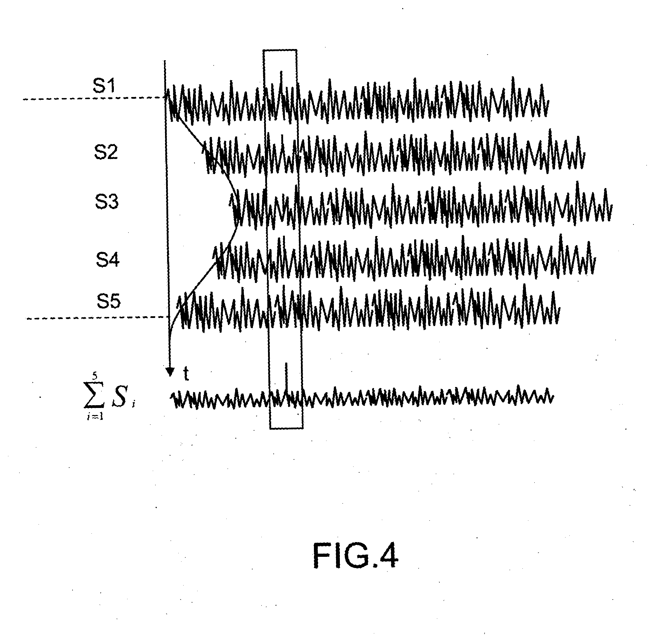

La figure 4 représente suivant un axe temporel vertical les spectres élémentaires S1, S2, S3, S4, S5 correspondant à cinq acquisitions élémentaires de signal électrique de battement effectuées successivement, sur une durée brève, valant par exemple $10\mu s$ qui correspond par exemple, à un faible déplacement de la ligne de visée LDV.
Dans des conditions où l'écho lumineux Sr est faible, l'analyse spectrale ne permet pas de détecter directement une raie fréquentielle correspondant à un décalage de fréquence Doppler sur un spectre élémentaire. Si $t_1$ est la date d'une acquisition élémentaire servant de référence, choisie parmi les cinq acquisitions élémentaires et $t_i$ la date de la i-eme acquisition élémentaire, la mise en cohérence des différentes acquisitions consiste à décaler individuellement les abscisses du spectre élémentaire d'ordre i de la quantité $F(t_i-t_1)$ pour constituer un ensemble de spectres élémentaires cohérents.
Avantageusement, la cinquième étape de la phase de « poursuite » comporte une détection de raie fréquentielle puissante et fine sur une accumulation de spectres fréquentiels des signaux électriques de battement mis en cohérence.
Une fois mis en cohérence, les spectres élémentaires sont accumulés pour constituer un spectre résultant. Si le spectre résultant comporte une unique raie fréquentielle puissante et étroite, l'hypothèse faite sur $\overleftarrow{V}$ est vérifiée. A l'inverse, si l'hypothèse sur $\overleftarrow{V}$ n'est pas vérifiée, c'est-à-dire, si le vecteur vitesse $\overleftarrow{V}$ réel est éloigné du vecteur vitesse $\overleftarrow{V}$ attendu, alors le spectre résultant comporte une raie fréquentielle faiblement puissante et dispersée en fréquence. La validation/infirmation de l'hypothèse faite sur la valeur du vecteur vitesse $\overleftarrow{V}$, qui a conduit à établir une valeur de F(t) est réalisée a posteriori.

En s'appuyant sur la puissance de calcul de l'unité de traitement UTR, on a avantage à étudier en parallèle de nombreuses hypothèses entretenues de façon à offrir les meilleures performances de poursuite et de précision.

Avantageusement, les trois dernières étapes de la phase de « poursuite » peuvent être répétées en boucle jusqu'à ce que l'une des hypothèses considérées à la deuxième étape soit validée à la cinquième étape de la phase de « poursuite ».

Le dispositif de mesure à sonde optique décrit ci-dessus peut également équiper une installation au sol telle qu'une éolienne pour la mesure du vent relatif.

## Revendications

1. Dispositif de mesure à sonde optique pour évaluer un vecteur de vitesse relative $\overleftarrow{V}$ d'un porteur par rapport à un milieu de référence MILREF, le dispositif équipant le porteur, le dispositif comportant :

   - une unité laser ULAS_A (10) fournissant un faisceau primaire Fp, de longueur d'onde $\lambda$, pour attaquer une unité de séparation USEP_A (20) délivrant un faisceau lumineux de signal Fs pour attaquer une voie de signal optique EMIREC (50), et un faisceau lumineux de référence Fr pour attaquer une première entrée d'un coupleur de mélange optique MEL (30).;
   - la voie de signal optique EMIREC, fournissant à l'émission un signal optique de puissance Sinc qui suit une direction appelée ligne de visée LDV et qui est concentré en une zone de focalisation ZOF, et d'autre part recueillant un écho lumineux Sr renvoyé par la zone de focalisation ZOF, le transportant jusqu'à une deuxième entrée du coupleur de mélange optique MEL ;
   - des moyens de déplacement de la zone de focalisation ZOF du signal optique de puissance Sinc dans le milieu de référence MILREF ;
   - le coupleur de mélange optique MEL délivrant un signal optique de battement comportant la somme du faisceau lumineux de référence Fr et de l'écho lumineux Sr ;
   - un détecteur photo-sensible DET (70), recevant sur sa surface sensible, le signal optique de battement issu du coupleur de mélange optique MEL et fournissant un signal électrique de battement,
   - une unité de traitement UTR (80), recevant le signal électrique de battement et délivrant une mesure de $\overleftarrow{V}$.

**caractérisé en ce que** les moyens de déplacement de la zone de focalisation ZOF agissent sur l'orientation de la ligne de visée LDV, l'animant d'un mouvement connu, de vitesse non nulle et **en ce que** l'unité de traitement UTR évalue le vecteur $\overleftarrow{V}$ en au moins une phase de « recherche » basée sur une identification avec une forme attendue de l'évolution de la fréquence du signal électrique de battement en fonction de l'orientation de la ligne de visée LDV pour déterminer une valeur approchée de $\overleftarrow{V}$, suivie d'une phase de « poursuite » basée sur une validation itérative de valeurs de $\overleftarrow{V}$ voisines de la valeur approchée de $\overleftarrow{V}$.

2. Dispositif selon la revendication 1, **caractérisé en ce que** la phase de recherche comporte au moins les quatre étapes suivantes

   - une première étape d'acquisition numérique d'au moins trois séquences temporelles de signal électrique de battement correspondant à des orientations différentes de la ligne de visée LDV, les séquences temporelles ayant une durée telle que l'orientation de la ligne de visée LDV peut être considérée comme immobile sur la durée de l'acquisition ;
   - une deuxième étape d'extraction du décalage de fréquence Doppler à partir de la mesure de la fréquence sur chacune des séquences temporelles ;
   - une troisième étape de détermination de la fonction théorique de modulation du décalage de fréquence Doppler en fonction du mouvement de la ligne de visé LDV ;
   - une quatrième étape d'identification de l'évolution temporelle des décalages de fréquence Doppler avec la fonction théorique de modulation.

3. Dispositif selon la revendication 1, **caractérisé en ce que** la phase de poursuite comporte au moins les cinq étapes suivantes :

   - une première étape consistant à réaliser une acquisition numérique du signal électrique de battement, l'acquisition débutant à une date connue et ayant une durée telle que l'orientation de la ligne de visée LDV ne peut pas être considérée comme immobile sur la durée de l'acquisition ;
   - une deuxième étape pour élaborer des hypothèses sur la valeur probable du vecteur $\overleftarrow{V}$ à la date de début de l'acquisition ;
   - une troisième étape pour scinder l'acquisition numérique du signal électrique de battement en séquences élémentaires, les séquences élémentaires ayant une durée telle que l'orientation de la ligne de visée LDV peut être considéré comme immobile pendant la durée des séquence.

- une quatrième étape de mise en cohérence des séquences élémentaires pour établir des séquences élémentaires recalées. Cette mise en cohérence permet de compenser les effets du mouvement de la ligne de visée LDV entre les dates de début des séquences, la mise en cohérence s'appuyant sur la valeur du vecteur $\overleftarrow{V}$ dans une des hypothèses considérées à la deuxième étape, la connaissance de la date de début de chaque séquence d'acquisition et la connaissance du mouvement de la ligne de visée LDV à tout instant;

- une cinquième étape de validation/infirmation des hypothèses basée sur une évaluation des caractéristiques spectrales des séquences élémentaires recalées.

4. Dispositif selon la revendication précédente, **caractérisé en ce que** les hypothèses sur la valeur du vecteur $\overleftarrow{V}$ considérées à la deuxième étape de la phase de « poursuite » sont bâties à partir de la valeur approchée de $\overleftarrow{V}$ obtenue à l'issue de l'étape de recherche.

5. Dispositif selon l'une des revendications 3 ou 4, **caractérisé en ce que** les trois dernières étapes de la phase de « poursuite » peuvent être répétées en boucle jusqu'à ce que l'une des hypothèses considérées à la deuxième étape soit validée à la cinquième étape de la phase de « poursuite ».

6. Dispositif selon l'une des revendications 3 à 5, **caractérisé en ce que** la cinquième étape de la phase de « poursuite » comporte une détection de raie fréquentielle puissante et fine sur une accumulation de spectres fréquentiels des signaux électriques de battement mis en cohérence.

7. Dispositif selon l'une des revendications précédentes, **caractérisé en ce que** les moyens de déplacement de la zone de focalisation ZOF du signal optique de puissance Sinc comportent une unité de déplacement UDP imprimant une orientation à la ligne de visée LDV du signal optique de puissance Sinc.

8. Dispositif selon la revendication précédente, **caractérisé en ce que** l'unité de déplacement UDP comporte au moins deux miroirs oscillants et **en ce que** l'orientation de la ligne de visée LDV est déterminée par des réflexions du signal optique de puissance Sinc sur les miroirs oscillant.

9. Dispositif selon la revendication précédente, **caractérisé en ce que** l'unité de déplacement UDP comporte au moins un prisme mobile, tournant suivant un axe de référence fixe et **en ce que** l'orientation de la ligne de visée LDV est déterminée par passage du signal optique de puissance Sinc au travers du prisme mobile.

10. Dispositif selon la revendication précédente, **caractérisé en ce que** l'axe de référence fixe est parallèle à la direction du mouvement du porteur.

11. Dispositif selon l'une des revendications précédentes, **caractérisé en ce que** l'unité de déplacement UDP imprime à la zone de focalisation ZOF un mouvement circulaire, de vitesse constante.

12. Dispositif selon la revendication 7, **caractérisé en ce que** l'unité de déplacement UDP agit, en outre, sur la distance séparant la zone de focalisation ZOF de l'unité de déplacement UDP.

13. Dispositif selon l'une des revendications 1 à 12, **caractérisé en ce que** l'unité laser ULAS (10) du dispositif de mesure par sonde optique est une source laser impulsionnelle.

14. Dispositif selon l'une des revendications 1 à 12, **caractérisé en ce que** l'unité laser ULAS (10) du dispositif de mesure par sonde optique est une source laser continue.

15. Dispositif selon l'une des revendications 1 à 14, **caractérisé en ce que** le porteur est une installation au sol.

**Claims**

1. An optical probe measurement device for evaluating a relative speed vector $\overleftarrow{V}$ of a carrier relative to a reference medium MILREF, the device being on board the carrier and including:

   - a laser unit ULAS_A (10) providing a primary beam Fp, of wavelength $\lambda$, for inputting into a splitter unit USEP_A (20) delivering a signal light beam Fs for inputting into an EMIREC optical signal path (50), and a reference light beam Fr for inputting into a first input of an optical mixing coupler MEL (30);
   - the EMIREC optical signal path, on the one hand, providing for emission an optical power signal Sinc which follows a direction referred to as the line of sight LDV and which is concentrated in a focussing zone ZOF, and, on the other hand, receiving a light echo Sr sent back by the focussing zone ZOF and carrying it to a second input of the optical mixing coupler MEL;
   - means of displacing the focussing zone ZOF of the optical power signal Sinc in the reference medium MILREF;

- the optical mixing coupler MEL providing an optical pulse signal comprising the sum of the reference light beam Fr and the light echo Sr;

- a light sensitive detector DET (70), receiving on its sensitive surface the optical pulse signal originating from the optical mixing coupler MEL and providing an electrical pulse signal;

- a processing unit UTR (80), receiving the electrical pulse signal and providing a measurement of $\overleftarrow{V}$.

**characterised in that** the means of displacing the focussing zone ZOF act upon the orientation of the line of sight LDV, subjecting it to a known movement, of non-zero speed and **in that** the processing unit UTR evaluates the vector $\overleftarrow{V}$ in at least one "search" phase based on an identification with an expected form of evolution of the frequency of the electrical pulse signal as a function of the orientation of the line of sight LDV in order to determine an approximate value of $\overleftarrow{V}$, followed by a "tracking" phase based on an iterative validation of values of $\overleftarrow{V}$ close to the approximate value of $\overleftarrow{V}$.

2. The device according to claim 1, **characterised in that** the search phase includes at least the four following steps:

   - a first step of digital acquisition of at least three time sequences of the electrical pulse signal corresponding to the different orientations of the line of sight LDV, the time sequences having a duration such that the orientation of the line of sight LDV may be considered to be fixed for the duration of the acquisition;

   - a second step of extracting the Doppler frequency shift from the measurement of the frequency on each of the time sequences;

   - a third step of determining the theoretical modulation function of the Doppler frequency shift as a function of the movement of the line of sight LDV;

   - a fourth step of identifying the time evolution of the Doppler frequency shift with the theoretical modulation function.

3. The device according to claim 1, **characterised in that** the tracking phase includes at least the five following steps:

   - a first step consisting in the digital acquisition of the electrical pulse signal, the acquisition commencing at a known date and having a duration such that the orientation of the line of sight LDV may not be considered to be fixed for the duration of the acquisition;

   - a second step of developing assumptions of the probable value of the vector $\overleftarrow{V}$ on the starting date of the acquisition;

   - a third step of splitting the digital acquisition of the electrical pulse signal into elementary sequences, the elementary sequences having a duration such that the orientation of the line of sight LDV may be considered to be fixed for the duration of the sequences;

   - a fourth step of making the elementary sequences coherent so as to establish corrected elementary sequences, this coherence step allows the effects of movement of the line of sight LDV to be compensated between the starting dates of the sequences, the coherence being based on the value of the vector $\overleftarrow{V}$ in one of the assumptions considered during the second step, knowledge of the starting date of each acquisition sequence and knowledge of the movement of the line of sight LDV at any instant;

   - a fifth step of validating/invalidating the assumptions based on an evaluation of the spectral characteristics of the corrected elementary sequences.

4. The device according to the preceding claim, **characterised in that** the assumptions of the value of the vector $\overleftarrow{V}$ considered during the second step of the "tracking" phase are established from the approximate value of $\overleftarrow{V}$ obtained on completion of the search step.

5. The device according to claims 3 or 4, **characterised in that** the last three steps of the "tracking" phase may be repeated in a loop until one of the assumptions considered during the second step is validated in the fifth step of the "tracking" phase.

6. The device according to any one of claims 3 to 5, **characterised in that** the fifth step of the "tracking" phase includes detection of a strong and narrow frequency line in an accumulation of frequency spectra of the electrical pulse signals brought into coherence.

7. The device according to any one of the preceding claims, **characterised in that** the means of displacing the focussing zone ZOF of the optical power signal Sinc include a displacement unit UDP impressing an orientation of the line of sight LDV of the optical power signal Sinc.

8. The device according to the preceding claim, **characterised in that** the displacement unit UDP includes at least two oscillating mirrors and **in that** the orientation of the line of sight LDV is determined by reflections of the optical power signal Sinc from the oscillating mirrors.

9. The device according to the preceding claim, **characterised in that** the displacement unit UDP includes at least one movable prism, rotating around a fixed reference axis and **in that** the orientation of the line of sight LDV is determined by the passage of the optical power signal Sinc through the movable prism.

10. The device according to the preceding claim, **characterised in that** the fixed reference axis is parallel to the direction of movement of the carrier.

11. The device according to any one of the preceding claims, **characterised in that** the displacement unit UDP impresses a circular movement of constant speed in the focussing zone ZOF.

12. The device according to claim 7, **characterised in that** the displacement unit UDP further acts upon the distance separating the focussing zone ZOF from the displacement unit UDP.

13. The device according to any one of claims 1 to 12, **characterised in that** the laser unit ULAS (10) of the optical probe measurement device is a pulse laser source.

14. The device according to any one of claims 1 to 12, **characterised in that** the laser unit ULAS (10) of the optical probe measurement device is a continuous laser source.

15. The device according to any one of claims 1 to 14, **characterised in that** the carrier is a ground installation.

**Patentansprüche**

1. Messvorrichtung mit optischer Sonde zum Beurteilen eines relativen Geschwindigkeitsvektors $\overleftarrow{V}$ eines Trägers mit Bezug auf ein Referenzmedium MILREF, wobei der Träger mit der Vorrichtung ausgestattet ist, wobei die Vorrichtung Folgendes beinhaltet:

   - eine Lasereinheit ULAS_A (10), die einen primären Strahl Fp mit Wellenlänge λ als Eingang in eine Teilereinheit USEP_A (20) liefert, die einen Signallichtstrahl Fs als Eingang in einen optischen EMIREC-Signalpfad (50) und einen Referenzlichtstrahl Fr als Eingang in einen ersten Eingang eines optischen Mischkopplers MEL (30) erzeugt;
   - wobei der optische EMIREC-Signalpfad bei Emission ein optisches Leistungssignal liefert, das einer Richtung folgt, die als Sichtlinie LDV bezeichnet wird und in einer Fokussierzone ZOF konzentriert ist, und andererseits ein von der Fokussierzone ZOF zurückgesandtes Lichtecho Sr erhält und es zu einem zweiten Eingang des optischen Mischkopplers MEL führt;
   - Mittel zum Bewegen der Fokussierzone ZOF des optischen Leistungssignals Sinc in dem Referenzmedium MILREF;
   - wobei der optische Mischkoppler MEL ein optisches Impulssignal liefert, das die Summe aus dem Referenzlichtstrahl Fr und dem Lichtecho Sr umfasst;
   - einen lichtempfindlichen Detektor DET (70), der auf seiner empfindlichen Fläche das vom optischen Mischkoppler MEL kommende optische Impulssignal empfängt und ein elektrisches Impulssignal erzeugt;
   - eine Verarbeitungseinheit UTR (80), die das elektrische Impulssignal empfängt und einen Messwert von $\overleftarrow{V}$ liefert,

   **dadurch gekennzeichnet, dass** die Mittel zum Bewegen der Fokussierzone ZOF die Orientierung der Sichtlinie LDV beeinflussen und sie in eine bekannte Bewegung mit einer Geschwindigkeit von ungleich null versetzen, und **dadurch**, dass die Verarbeitungseinheit UTR den Vektor $\overleftarrow{V}$ in wenigstens einer "Such"-Phase auf der Basis einer Identifikation mit einer erwarteten Form der Evolution der Frequenz des elektrischen Impulssignals in Abhängigkeit von der Orientierung der Sichtlinie LDV beurteilt, um einen Näherungswert von $\overleftarrow{V}$ zu bestimmen, gefolgt von einer "Verfolgung"-Phase auf der Basis einer iterativen Validierung von Werten von $\overleftarrow{V}$ in der Nähe des Näherungswertes von $\overleftarrow{V}$.

2. Vorrichtung nach Anspruch 1, **dadurch gekennzeichnet, dass** die Suchphase wenigstens die vier folgenden Schritte beinhaltet:

   - einen ersten Schritt des digitalen Erfassens von wenigstens drei Zeitsequenzen des elektrischen Impulssignals, die unterschiedlichen Orientierungen der Sichtlinie LDV entsprechen, wobei die Zeitsequenzen eines solche Dauer haben, dass die Orientierung der Sichtlinie LDV als für die Dauer der Erfassung fest angesehen werden kann;
   - einen zweiten Schritt des Extrahierens der Doppler-Frequenzabweichung vom Messwert der Frequenz bei jeder der Zeitsequenzen;
   - einen dritten Schritt des Ermittelns der theoretischen Modulationsfunktion der Doppler-Frequenzabweichungen in Abhängigkeit von der Bewegung der Sichtlinie LDV;
   - einen vierten Schritt des Identifizierens der Zeitevolution der Doppler-Frequenzabweichungen mit der theoretischen Modulationsfunktion.

**3.** Vorrichtung nach Anspruch 1, **dadurch gekennzeichnet, dass** die Verfolgungsphase wenigstens die folgenden fünf Schritte beinhaltet:

- einen ersten Schritt bestehend aus der digitalen Erfassung des elektrischen Impulssignals, wobei die Erfassung an einem bekannten Datum beginnt und eine solche Dauer hat, dass die Orientierung der Sichtlinie LDV nicht als für die Dauer der Erfassung fest angesehen werden kann;
- einen zweiten Schritt des Aufstellens von Annahmen über den wahrscheinlichen Wert des Vektors $\overleftarrow{V}$ am Startdatum der Erfassung;
- einen dritten Schritt des Unterteilens der digitalen Erfassung des elektrischen Impulssignals in elementare Sequenzen, wobei die elementaren Sequenzen eine solche Dauer haben, dass die Orientierung der Sichtlinie LDV als für die Dauer der Sequenzen fest angesehen werden kann;
- einen vierten Schritt des Kohärentmachens der elementaren Sequenzen, um justierte elementare Sequenzen zu erzeugen, wobei es dieser Kohärenzmachungsschritt ermöglicht, die Effekte der Bewegung der Sichtlinie LDV zwischen den Startdaten der Sequenzen zu kompensieren, wobei sich das Kohärentmachen auf den Wert des Vektors $\overleftarrow{V}$ in einer der im zweiten Schritt betrachteten Annahmen, die Kenntnis des Startdatums jeder Erfassungssequenz und die Kenntnis der Bewegung der Sichtlinie LDV in jedem Augenblick stützt;
- einen fünften Schritt des Validierens/Widerlegens der Annahmen auf der Basis einer Beurteilung der Spektralcharakteristiken der korrigierten elementaren Sequenzen.

**4.** Vorrichtung nach einem der vorherigen Ansprüche, **dadurch gekennzeichnet, dass** die Annahmen über den Wert des im dritten Schritt der "Verfolgung"-Phase betrachteten Vektors $\overleftarrow{V}$ anhand des Näherungswertes von $\overleftarrow{V}$ erstellt werden, der nach dem Suchschritt erhalten wurde.

**5.** Vorrichtung nach Anspruch 3 oder 4, **dadurch gekennzeichnet, dass** die drei letzten Schritte der "Verfolgung"-Phase in einem Schleifenmodus wiederholt werden können, bis eine der im zweiten Schritt betrachteten Annahmen im fünften Schritt der "Verfolgung"-Phase validiert ist.

**6.** Vorrichtung nach einem der Ansprüche 3 bis 5, **dadurch gekennzeichnet, dass** der fünfte Schritt der "Verfolgung"-Phase die Detektion einer starken und feinen Frequenzlinie auf einer Akkumulation von Frequenzspektren der kohärent gemachten elektrischen Impulssignale beinhaltet.

**7.** Vorrichtung nach einem der vorherigen Ansprüche, **dadurch gekennzeichnet, dass** die Mittel zum Bewegen der Fokussierzone ZOF des optischen Leistungssignals Sinc eine Bewegungseinheit UDP beinhaltet, die der Sichtlinie LDV des optischen Leistungssignals Sinc eine Orientierung aufzwingt.

**8.** Vorrichtung nach einem der vorherigen Ansprüche, **dadurch gekennzeichnet, dass** die Bewegungseinheit UDP wenigstens zwei oszillierende Spiegel beinhaltet, und **dadurch**, dass die Orientierung der Sichtlinie LDV durch Reflexionen des optischen Leistungssignals Sinc auf den oszillierenden Spiegeln bestimmt wird.

**9.** Vorrichtung nach einem der vorherigen Ansprüche, **dadurch gekennzeichnet, dass** die Bewegungseinheit UDP wenigstens ein bewegliches Prisma beinhaltet, das um eine feste Referenzachse rotiert, und **dadurch**, dass die Orientierung der Sichtlinie LDV anhand der Passage des optischen Leistungssignals Sinc durch das bewegliche Prisma bestimmt wird.

**10.** Vorrichtung nach einem der vorherigen Ansprüche, **dadurch gekennzeichnet, dass** die feste Referenzachse parallel zur Bewegungsrichtung des Trägers verläuft.

**11.** Vorrichtung nach einem der vorherigen Ansprüche, **dadurch gekennzeichnet, dass** die Bewegungseinheit UDP der Fokussierzone ZOF eine kreisförmige Bewegung mit einer konstanten Geschwindigkeit aufzwingt.

**12.** Vorrichtung nach Anspruch 7, **dadurch gekennzeichnet, dass** die Bewegungseinheit UDP ferner die Distanz beeinflusst, die die Fokussierzone ZOF von der Bewegungseinheit UDP trennt.

**13.** Vorrichtung nach einem der Ansprüche 1 bis 12, **dadurch gekennzeichnet, dass** die Lasereinheit ULAS (10) der Messvorrichtung mit optischer Sonde eine gepulste Laserquelle ist.

**14.** Vorrichtung nach einem der Ansprüche 1 bis 12, **dadurch gekennzeichnet, dass** die Lasereinheit ULAS (10) der Messvorrichtung mit optischer Sonde eine kontinuierliche Laserquelle ist.

**15.** Vorrichtung nach einem der Ansprüche 1 bis 14, **dadurch gekennzeichnet, dass** der Träger eine Bodeninstallation ist.

FIG.1

FIG.2

FIG.3a

FIG.3b

FIG.3

FIG.4

## RÉFÉRENCES CITÉES DANS LA DESCRIPTION

**Documents brevets cités dans la description**

- US 5313263 A

- US 3984685 A